# EUROPÄISCHE PATENTSCHRIFT

(11) **EP 2 114 706 B1**
(45) Veröffentlichungstag und Bekanntmachung des Hinweises auf die Patenterteilung: **29.12.2010**
(21) Anmeldenummer: 08701467.6
(22) Anmeldetag: 14.01.2008
(51) Int. Cl.: B60G 17/016, B60R 21/0132

(54) **VERFAHREN UND VORRICHTUNG ZUM ERMITTELN EINES SIGNALVERSATZES EINES ROLLRATENSENSORS**
METHOD AND DEVICE FOR DETERMINING A SIGNAL OFFSET OF A ROLL RATE SENSOR
PROCÉDÉ ET DISPOSITIF POUR DÉTERMINER UN DÉCALAGE DE SIGNAL D'UN CAPTEUR DE TAUX DE ROULIS

(30) Priorität: 30.01.2007 DE 102007004606
(43) Veröffentlichungstag der Anmeldung: 11.11.2009
(73) Patentinhaber: Continental Automotive GmbH, 30165 Hannover (DE)
(72) Erfinder: KRETSCHMANN, Matthias, 93047 Regensburg (DE); JIANG, Zheng-Yu, 93053 Regensburg (DE); SCHLACHTER, Jens Daniel, 93059 Regensburg (DE)
(86) Internationale Anmeldenummer: PCT/EP2008/050354
(87) Internationale Veröffentlichungsnummer: WO 2008/092730

(56) Entgegenhaltungen:
- EP-A- 1 388 473
- WO-A-2008/046700

## Beschreibung

Die Erfindung betrifft ein Verfahren und eine Vorrichtung zum Ermitteln eines Signalversatzes eines Rollratensensors nach den Oberbegriffen der unabhängigen Patentansprüche 1 und 8.

Das Signal des Rollratensensors ist repräsentativ für eine Rollrate des Fahrzeugs. Die Rollrate beschreibt eine Drehung des Fahrzeugs um eine Längsachse des Fahrzeugs, die sich durch einen Schwerpunkt des Fahrzeugs erstreckt. Falls sich das Fahrzeug nicht um die Längsachse des Fahrzeugs dreht, sollte der Rollratensensor ein Signal erzeugen, das dafür repräsentativ ist, dass die Rollrate gleich Null ist. In der Regel weisen Rollratensensoren jedoch einen Signalversatz auf. Der Signalversatz kann auch als Offset bezeichnet werden. Der Signalversatz bewirkt, dass der Rollratensensor selbst in absoluter Ruheposition eine Rollrate signalisiert, die ungleich Null ist. Falls der Signalversatz bekannt ist, kann dieser bei der Ermittlung der Rollrate berücksichtigt werden. Somit kann durch Kenntnis des Signalversatzes die Rollrate besonders präzise ermittelt werden.

Aus der WO 2008/046700 A1 ist ein Verfahren zum Ermitteln eines Nickratensensors eines Fahrzeugs bekannt, bei dem ein Signal des Nickratensensors erfasst wird. Eine Längsbeschleunigung des Fahrzeugs wird ermittelt und deren zeitliche Ableitung bestimmt. Die Ermittlung des Signalversatzes des Nickratensensors findet statt, falls der Betrag der zeitlichen Ableitung der Längsbeschleunigung kleiner als ein erster vorgegebener Schwellenwert ist.

Die DE 691 26 929 T2 offenbart ein Verfahren zum Ermitteln eines Signalversatzes eines Rollratensensors eines Fahrzeugs, bei dem ein Signal des Rollratensensors erfasst wird, und abhängig von dem Signal des Rollratensensors der Signalversatz des Rollratensensors ermittelt wird.

Es ist Aufgabe der Erfindung ein Verfahren und eine Vorrichtung zum Ermitteln eines Signalversatzes eines Rollratensensors zu schaffen, das beziehungsweise die einfach ein besonders präzises Ermitteln des Signalversatzes des Rollratensensors ermöglicht.

Die Aufgabe der Erfindung wird gelöst durch die Merkmale der unabhängigen Ansprüche 1 und 8. Vorteilhafte Ausgestaltungen der Erfindung sind in den Unteransprüchen angegeben.

Die Erfindung zeichnet sich aus durch ein Verfahren und eine korrespondierend ausgebildete Vorrichtung zum Ermitteln eines Signalversatzes eines Rollratensensors eines Fahrzeugs. Ein Signal des Rollratensensors wird erfasst, eine Querbeschleunigung des Fahrzeugs wird ermittelt, eine zeitliche Ableitung der Querbeschleunigung wird ermittelt, und es wird überprüft, ob ein Betrag der zeitlichen Ableitung der Querbeschleunigung kleiner ist als ein vorgegebener erster Schwellenwert. Abhängig von dem Signal des Rollratensensors wird der Signalversatz des Rollratensensors ermittelt, falls der Betrag der zeitlichen Ableitung der Querbeschleunigung kleiner ist als der vorgegebene erste Schwellenwert.

Dies ermöglicht ein dynamisches Ermitteln des Signalversatzes des Rollratensensors bei einer Bewegung des Fahrzeugs. Dies trägt zu einem präzisen Ermitteln des Signalversatzes des Rollratensensors bei. Der Signalversatz des Rollratensensors wird auch als Offset des Rollratensensors bezeichnet.

In einer vorteilhaften Ausführungsform wird das Signal des Rollratensensors über eine vorgegebene Zeitdauer erfasst und der Signalversatz nur abhängig von den Anteilen des Signals des Rollratensensors ermittelt, die erfasst werden während der Betrag der zeitlichen Ableitung der Querbeschleunigung kleiner als der vorgegebene erste Schwellenwert ist. Somit können sich mehrere Teilintervalle ergeben, in denen der Signalversatz ermittelt wird. Eine Mittelung über das Signal des Rollratensensors zum Ermitteln des Signalversatzes kann sich über ein oder mehrere Teilintervalle erstrecken. Dies ermöglicht es, den Signalversatz des Rollratensensors besonders einfach und mit hoher Präzision bei einer Bewegung des Fahrzeugs zu ermitteln.

In einer weiteren vorteilhaften Ausführungsform wird die Querbeschleunigung des Fahrzeugs mit einem Querbeschleunigungs-Sensor ermittelt. Damit ist ein besonders einfaches und präzises Ermitteln der Querbeschleunigung des Fahrzeugs und damit des Signalversatzes des Rollratensensors möglich.

In einer weiteren vorteilhaften Ausführungsform wird die Querbeschleunigung des Fahrzeugs abhängig von zumindest zwei Radgeschwindigkeiten von Rädern des Fahrzeugs ermittelt. Die Radgeschwindigkeit ist die Geschwindigkeit, mit der sich ein Schwerpunkt des Rades relativ zu einer Fahrbahn bewegt, über den das Fahrzeug fährt und insbesondere über den das entsprechende Rad rollt. Auf diese Weise ist eine einfache Ermittlung der Querbeschleunigung des Fahrzeugs auch ohne Querbeschleunigungs-Sensor und damit eine Bestimmung des Signalversatzes des Rollratensensors möglich.

In einer weiteren vorteilhaften Ausführungsform wird eine zeitliche Ableitung des Signals des Rollratensensors ermittelt und der Signalversatz des Rollratensensors wird abhängig vom Signal des Rollratensensors ermittelt, falls ein Betrag der zeitlichen Ableitung des Signals des Rollratensensors kleiner als ein vorgegebener zweiter Schwellenwert ist. Damit ist eine einfache und präzise Ermittlung der Rollrate des Fahrzeugs und damit eine genaue Feststellung des Fahrzeugstillstands möglich. In der Folge ist ein besonders genaues Ermitteln des Signalversatzes des Rollratensensors bei Fahrzeugstillstand möglich.

In einer weiteren vorteilhaften Ausführungsform wird die Radgeschwindigkeit des zumindest einen Rades des Kraftfahrzeugs ermittelt und der Signalversatz des Rollratensensors wird abhängig vom Signal des Rollratensensors ermittelt, falls ein Betrag der ermittelten Radgeschwindigkeit des entsprechenden Rades kleiner als ein vorgegebener dritter Schwellenwert ist. Dadurch ist eine einfache und präzise Ermittlung der Radgeschwindigkeit des Fahrzeugs und damit eine genaue Feststellung des Fahrzeugstillstands möglich. Dies ermöglicht ein genaues Ermitteln des Signalversatzes des Rollratensensors bei Fahrzeugstillstand.

In einer weiteren vorteilhaften Ausführungsform wird eine Fahrzeuggeschwindigkeit ermittelt und der Signalversatz des Rollratensensors wird abhängig vom Signal des Rollratensensors ermittelt, falls ein Betrag der ermittelten Fahrzeuggeschwindigkeit kleiner als der vorgegebene dritte Schwellenwert ist. Damit kann ein Fahrzeugstillstand genau festgestellt werden. Des weiteren ist so ein besonders präzises Ermitteln des Signalversatzes des Rollratensensors bei Fahrzeugstillstand möglich.

Vorteilhafte Ausführungsformen der Erfindung sind im Folgenden anhand von schematischen Zeichnungen näher erläutert.

Es zeigen:
- Figur 1: eine schematische Ansicht eines Fahrzeugs,
- Figur 2: ein erstes Flussdiagramm für ein Verfahren zum Er- mitteln eines Signalversatzes eines Rollratensen- sors,

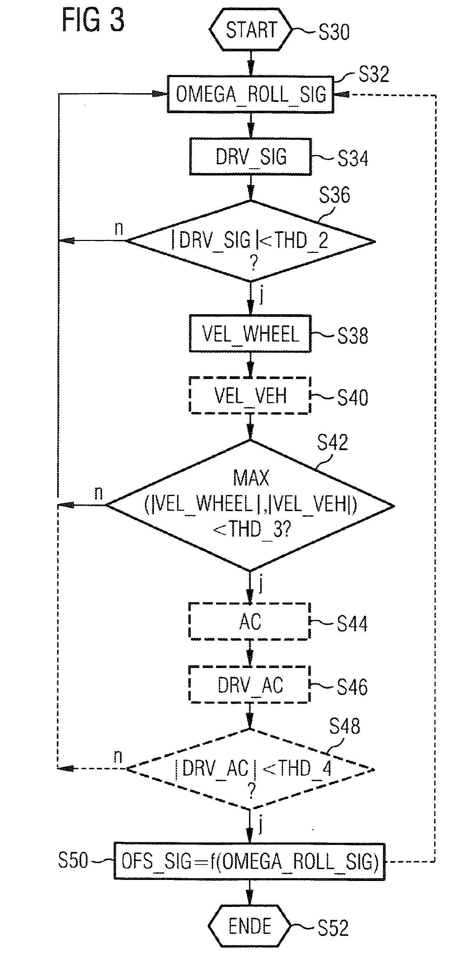

- Figur 3: ein zweites Flussdiagramm für das Verfahren zum Er- mitteln des Signalversatzes des Rollratensensors, und
- Figur 4: Rechenvorschriften für das Verfahren zum Ermitteln des Signalversatzes des Rollratensensors.

Elemente gleicher Konstruktion oder Funktion sind figurenübergreifend mit den gleichen Bezugszeichen gekennzeichnet.

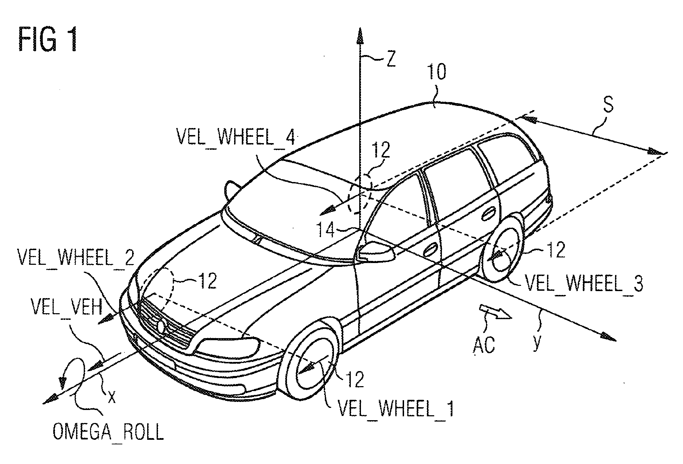

Figur 1 zeigt ein Fahrzeug 10, das einen Schwerpunkt 14 aufweist. Ein Koordinatensystem ist vorgegeben, bei dem eine X-Achse X repräsentativ ist für eine Längsachse des Fahrzeugs 10, eine Y-Achse Y repräsentativ ist für eine Querachse des Fahrzeugs 10 und eine Z-Achse Z repräsentativ ist für eine Hochachse des Fahrzeugs 10. Die Achsen schneiden sich im Schwerpunkt 14. Eine Hinterachse des Fahrzeugs 10 weist eine Spurweite S auf. Ferner weist das Fahrzeug 10 vorzugsweise vier Räder 12 auf. Das Fahrzeug 10 kann jedoch auch mehr oder weniger Räder 12 umfassen.

Eine Rollrate OMEGA_ROLL ist repräsentativ für eine Drehung des Fahrzeugs 10 um die Querachse des Fahrzeugs 10. Eine Fahrzeuggeschwindigkeit VEL_VEH repräsentiert eine Geschwindigkeit des Fahrzeugs 10. Eine Radgeschwindigkeit VEL_WHEEL_1 eines ersten Vorderrades, eine Radgeschwindigkeit VEL_WHEEL_2 eines zweiten Vorderrades, eine Radgeschwindigkeit VEL_WHEEL_3 eines ersten Hinterrades und eine Radgeschwindigkeit VEL_WHEEL_4 eines zweiten Hinterrades repräsentieren Längsgeschwindigkeiten der entsprechenden Radschwerpunkte relativ zu einer Fahrbahn, die vom Fahrzeug 10 befahren wird. Die Radgeschwindigkeiten werden vorzugsweise abhängig von Radien der Räder 12 und abhängig von Winkelgeschwindigkeiten ermittelt, mit der sich die entsprechenden Räder 12 um die eigene Achse drehen.

Ein Rollratensensor ermöglicht in einfacher Weise das Ermitteln der Rollrate OMEGA_ROLL des Fahrzeugs 10. Die Rollrate OMEGA_ROLL wird vorzugsweise zum Ermitteln einer Orientierung des Fahrzeugs 10 herangezogen. Ferner kann beispielsweise abhängig von der Rollrate OMEGA_ROLL beim Einfahren in eine Steilkurve eine Referenzgeschwindigkeit der Fahrzeuggeschwindigkeit VEL_VEH ermittelt werden. Dies kann beispielsweise dazu beitragen, dass ein automatisches Seitenstabilitätssystem, beispielsweise ein Überrollsystem oder ein ESP-System, sehr präzise steuerbar ist.

Durch eine Veränderung einer Temperatur und/oder durch einen Alterungsprozess des Rollratensensors kann ein Signalversatz OFS_SIG des Rollratensensors hervorgerufen und/oder verändert werden. Bei dem Signalversatz OFS_SIG handelt es sich um eine Nullpunktverschiebung, die bewirkt, dass die Rollrate OMEGA_ROLL größer oder kleiner signalisiert wird, als sie tatsächlich ist. Der Rollratensensor ist vorzugsweise ein Drehratensensor.

Falls bekannt ist, dass sich der Rollratensensor in Ruhe befindet, kann der Signalversatz OFS_SIG durch Mitteln eines Signals OMEGA_ROLL_SIG des Rollratensensors ermittelt werden. Der Signalversatz OFS_SIG kann dann bei dem Ermitteln der Rollrate OMEGA_ROLL berücksichtigt werden, so dass die Rollrate OMEGA_ROLL auch bei unterschiedlichen Temperaturen und/oder bei einem älteren Rollratensensor korrekt ermittelt wird.

Ein Rollen des Fahrzeugs 10 mit der Rollrate OMEGA_ROLL wird regelmäßig durch eine Veränderung einer Querbeschleunigung AC des Fahrzeugs 10 hervorgerufen. Ist somit die Querbeschleunigung AC näherungsweise konstant, so kann davon ausgegangen werden, dass die tatsächliche Rollrate OMEGA_ROLL gleich Null ist. Insbesondere ist die tatsächliche Rollrate OMEGA_ROLL proportional zu einer zeitlichen Ableitung DRV_AC der Querbeschleunigung AC des Fahrzeugs 10.

Ein erstes Programm zum Ermitteln des Signalversatzes OFS_SIG des Rollratensensors ist vorzugsweise auf einem Speichermedium einer Steuervorrichtung des Fahrzeugs 10 gespeichert. Das erste Programm dient dazu, den Signalversatz OFS_SIG dynamisch, also auch während einer Fahrt des Fahrzeugs 10, zu ermitteln.

Das erste Programm wird vorzugsweise in einem Schritt S10 gestartet, in den gegebenenfalls Variablen initialisiert werden.

In einem Schritt S12 wird das Signal OMEGA_ROLL_SIG des Rollratensensors ermittelt.

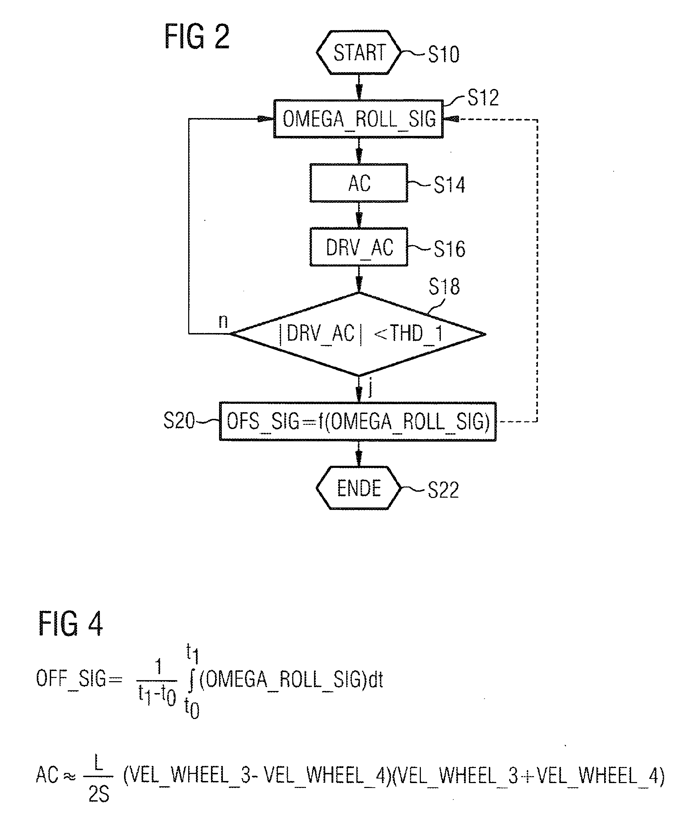

In einem Schritt S14 wird die Querbeschleunigung AC des Fahrzeugs 10 ermittelt. Die Querbeschleunigung AC des Fahrzeugs 10 kann beispielsweise durch einen Querbeschleunigungssensor ermittelt werden. Alternativ dazu kann die Querbeschleunigung AC auch anhand der in der Figur 4 angegebenen Rechenvorschrift ermittelt werden. Nach dieser Rechenvorschrift kann die Querbeschleunigung AC abhängig von der Spurweite S des Fahrzeugs 10, der Radgeschwindigkeit VEL_WHEEL_3 des ersten Hinterrades und der Radgeschwindigkeit VEL_WHEEL_4 des zweiten Hinterrades ermittelt werden.

In einem Schritt S16 wird die zeitliche Ableitung DRV_AC der Querbeschleunigung AC des Fahrzeugs 10 ermittelt.

In einem Schritt S18 wird überprüft, ob ein Betrag der zeitlichen Ableitung DRV_AC der Querbeschleunigung AC des Fahrzeugs 10 kleiner als ein vorgegebener erster Schwellenwert THD_1 ist. Ist die Bedingung des Schritts S18 nicht erfüllt, so wird die Bearbeitung im Schritt S12 fortgesetzt. Ist die Bedingung des Schritts S18 erfüllt, so kann die Bearbeitung in einem Schritt S20 fortgesetzt werden.

Im Schritt S20 wird der Signalversatz OFS_SIG abhängig vom Signal OMEGA_ROLL_SIG des Rollratensensors ermittelt, vorzugsweise nach der in Figur 4 angegebenen Rechenvorschrift. Gemäß dieser Rechenvorschrift wird das Signal OMEGA_ROLL_SIG des Rollratensensors über einen Zeitraum von einem Startzeitpunkt t₀ bis zu einem Endzeitpunkt t₁ ermittelt. Der Startzeitpunkt t₀ und der Endzeitpunkt t₁ werden durch die im Schritt S18 angegebene Bedingung definiert. Sollte die Bedingung des Schritts S18 während des Ermittelns des Signalversatzes im Schritt S20 nicht mehr erfüllt sein, so wird das erste Programm unterbrochen. Vorzugsweise wird der Signalversatz OFS_SIG über einen längeren Zeitraum ermittelt, in dem das Ermitteln des Signalversatzes OFS_SIG mehrmals unterbrochen wird. Es werden jedoch lediglich die Anteile des Signals OMEGA_ROLL_SIG des Rollratensensors zum Ermitteln des Signalversatzes OFS_SIG herangezogen, während deren Ermittlung die Bedingung des Schritts S18 erfüllt ist. Alternativ zu der zeitlichen Mittelung des Signals OMEGA_ROLL_SIG des Rollratensensors können auch die einzelnen Werte, aus denen das Signal OMEGA_ROLL_SIG des Rollratensensors besteht, über die Anzahl aller erfassten Werte gemittelt werden. Alternativ kann die Mittelung durch einen Tiefpassfilter erfolgen.

In einem Schritt S22 kann das erste Programm beendet werden. Vorzugsweise wird das erste Programm jedoch während des Betriebes des Fahrzeugs 10 regelmäßig abgearbeitet.

Alternativ oder zusätzlich kann ein zweites Programm zum Ermitteln des Signalversatzes OFS_SIG auf dem Speichermedium der Steuervorrichtung abgespeichert sein. Das zweite Programm dient dazu, bei einem Stillstand des Fahrzeugs 10 zuverlässig und präzise den Signalversatz OFS_SIG des Rollratensensors zu ermitteln. Beispielsweise ermöglicht das zweite Programm ein sehr präzises Ermitteln des Signalversatzes OFS_SIG, falls das Fahrzeug 10 transportiert wird, beispielsweise auf einer Fähre und/oder einem Verladezug, da solche Situationen erkannt und ausgeschlossen werden können.

Das zweite Programm wird vorzugsweise in einem Schritt S30 gestartet, in dem gegebenenfalls Variablen initialisiert werden.

In einem Schritt S32 wird das Signal OMEGA_ROLL_SIG des Rollratensensors erfasst.

Im Schritt S34 wird zusätzlich eine zeitliche Ableitung DRV_SIG des Signals OMEGA_ROLL_SIG des Rollratensensors ermittelt.

In einem Schritt S36 wird überprüft, ob ein Betrag der zeitlichen Ableitung DRV_SIG des Signals OMEGA_ROLL_SIG des Rollratensensors kleiner ist als ein vorgegebener zweiter Schwellenwert THD_2. Dies beruht auf der Erkenntnis, dass der Signalversatz OFS_SIG in der Regel einen konstanten Beitrag zum Signal OMEGA_ROLL_SIG des Rollratensensors liefert. Sollte somit die zeitliche Ableitung DRV_SIG des Signals OMEGA_ROLL_SIG des Rollratensensors gleich oder größer dem vorgegebenen zweiten Schwellenwert THD_2 sein, so kann es sich beim aktuellen Signal OMEGA_ROLL_SIG des Rollratensensors nicht nur um den Signalversatz OFS_SIG des Rollratensensors handeln. Ist die Bedingung des Schritts S36 nicht erfüllt, so wird die Bearbeitung erneut im Schritt S32 fortgesetzt. Ist die Bedingung des Schritts S36 erfüllt, so wird die Bearbeitung im Schritt S38 fortgesetzt.

In einem Schritt S38 wird eine Radgeschwindigkeit VEL_WHEEL zumindest eines der Räder 12 des Fahrzeugs 10 ermittelt. Bevorzugt werden die Radgeschwindigkeiten VEL_WHEEL aller Räder 12 ermittelt, insbesondere die Radgeschwindigkeit VEL_WHEEL_1 des ersten Vorderrades, die Radgeschwindigkeit VEL_WHEEL_2 des zweiten Vorderrades, die Radgeschwindigkeit VEL_WHEEL_3 des ersten Hinterrades und die Radgeschwindigkeit VEL_WHEEL_4 des zweiten Hinterrades.

Zusätzlich kann in einem Schritt S40 die Fahrzeuggeschwindigkeit VEL_VEH ermittelt werden. Dies ist besonders dann vorteilhaft, wenn die Fahrzeuggeschwindigkeit VEL_VEH des Fahrzeugs 10 unabhängig von der Radgeschwindigkeit VEL_WHEEL der Räder 12 bekannt ist, beispielsweise bei Verwendung eines ABS-Systems im Fahrzeug 10.

In einem Schritt S42 wird eine Maximalauswahl MAX aus den Beträgen der Radgeschwindigkeiten VEL_WHEEL der Räder 12 und, falls im Schritt S40 die Fahrzeuggeschwindigkeit VEL_VEH ermittelt wurde, dem Betrag der Fahrzeuggeschwindigkeit VEL_VEH des Fahrzeugs 10 ermittelt. Dies bedeutet, dass überprüft wird, welcher der Beträge der Radgeschwindigkeiten VEL_WHEEL der Räder 12 und der Fahrzeuggeschwindigkeit VEL_VEH der größte ist. Daraufhin wird überprüft, ob der größte der Beträge kleiner als ein vorgegebener dritter Schwellenwert THD_3 ist. Ist die Bedingung des Schritts S42 nicht erfüllt, so wird die Bearbeitung erneut im Schritt S32 fortgesetzt. Ist die Bedingung des Schritts S42 erfüllt, so kann die Bearbeitung in einem Schritt S44 fortgesetzt werden.

In einem Schritt S44 kann die Querbeschleunigung AC des Fahrzeugs 10 ermittelt werden.

In einem Schritt S46 kann die zeitliche Ableitung DRV_AC der Querbeschleunigung AC des Fahrzeugs 10 ermittelt werden.

Wurde in dem Schritt S46 die zeitliche Ableitung DRV_AC der Querbeschleunigung AC des Fahrzeugs 10 ermittelt, so kann in einem Schritt S48 überprüft werden, ob der Betrag der zeitlichen Ableitung DRV_AC der Querbeschleunigung AC kleiner ist als ein vorgegebener vierter Schwellenwert THD_4. Ist die Bedingung des Schritts S48 nicht erfüllt, so wird die Bearbeitung erneut im Schritt S32 fortgesetzt.

Ist die Bedingung des Schritts S48 erfüllt, so wird die Bearbeitung in einem Schritt S50 fortgesetzt. Im Schritt S50 wird entsprechend dem Schritt S20 des ersten Programms der Signalversatz OFS_SIG abhängig vom Signal OMEGA_ROLL_SIG des Rollratensensors ermittelt.

In einem Schritt S52 kann das zweite Programm beendet werden. Vorzugsweise wird das zweite Programm während des Betriebs des Fahrzeugs 10 regelmäßig abgearbeitet.

## Patentansprüche

1. Verfahren zum Ermitteln eines Signalversatzes (OFS_SIG) eines Rollratensensors eines Fahrzeugs (10), bei dem ein Signal (OMEGA_ROLL_SIG) des Rollratensensors erfasst wird und abhängig von dem Signal (OMEGA_ROLL_SIG) des Rollratensensors der Signalversatz (OFS_SIG) des Rollratensensors ermittelt wird, **dadurch gekennzeichnet, dass**
- eine Querbeschleunigung (AC) des Fahrzeugs (10) ermittelt wird,
- eine zeitliche Ableitung (DRV_AC) der Querbeschleunigung (AC) ermittelt wird,
- überprüft wird, ob ein Betrag der zeitlichen Ableitung (DRV_AC) der Querbeschleunigung (AC) kleiner als ein vorgegebener erster Schwellenwert (THD_1) ist und dass
- die Ermittlung des Signalversatz (OFS_SIG) des Rollratensensors erfolgt, falls der Betrag der zeitlichen Ableitung (DRV_AC) der Querbeschleunigung (AC) kleiner als der vorgegebene erste Schwellenwert (THD_1) ist.

2. Verfahren nach Anspruch 1, bei dem das Signal (OMEGA_ROLL_SIG) des Rollratensensors über eine vorgegebene Zeitdauer erfasst wird und der Signalversatz (OFS_SIG) nur abhängig von den Anteilen des Signals (OMEGA_ROLL_SIG) des Rollratensensors ermittelt wird, die erfasst werden während der Betrag der zeitlichen Ableitung (DRV_AC) der Querbeschleunigung (AC) kleiner als der vorgegebene erste Schwellenwert (THD_1) ist.

3. Verfahren nach einem der vorhergehenden Ansprüche, bei dem die Querbeschleunigung (AC) des Fahrzeugs (10) mit einem Querbeschleunigungs-Sensor ermittelt wird.

4. Verfahren nach einem der vorhergehenden Ansprüche, bei dem die Querbeschleunigung (AC) des Fahrzeugs (10) abhängig von zumindest zwei Radgeschwindigkeiten (VEL_WHEEL) von Rädern (12) des Fahrzeugs (10) ermittelt wird.

5. Verfahren nach einem der vorhergehenden Ansprüche, bei dem eine zeitliche Ableitung (DRV_SIG) des Signals (OMEGA_ROLL_SIG) des Rollratensensors ermittelt wird und bei dem der Signalversatz (OFS_SIG) des Rollratensensors abhängig vom Signal (OMEGA_ROLL_SIG) des Rollratensensors ermittelt wird, falls ein Betrag der zeitlichen Ableitung (DRV_SIG) des Signals (OMEGA_ROLL_SIG) des Rollratensensors kleiner als ein vorgegebener zweiter Schwellenwert (THD_2) ist.

6. Verfahren nach einem der vorhergehenden Ansprüche, bei dem die Radgeschwindigkeit (VEL_WHEEL) des zumindest einen Rades (12) des Kraftfahrzeugs (10) ermittelt wird und bei dem der Signalversatz (OFS_SIG) des Rollratensensors abhängig vom Signal (OMEGA_ROLL_SIG) des Rollratensensors ermittelt wird, falls ein Betrag der ermittelten Radgeschwindigkeit (VEL_WHEEL) des entsprechenden Rades (12) kleiner als ein vorgegebener dritter Schwellenwert (THD_3) ist.

7. Verfahren nach Anspruch 6, bei dem eine Fahrzeuggeschwindigkeit (VEL_VEH) ermittelt wird und bei dem der Signalversatz (OFS_SIG) des Rollratensensors abhängig vom Signal (OMEGA_ROLL_SIG) des Rollratensensors ermittelt wird, falls ein Betrag der ermittelten Fahrzeuggeschwindigkeit (VEL_VEH) kleiner als der vorgegebene dritte Schwellenwert (THD_3) ist.

8. Vorrichtung zum Ermitteln eines Signalversatzes (OFS_SIG) eines Rollratensensors eines Fahrzeugs (10), die zum Erfassen eines Signals (OMEGA_ROLL_SIG) des Rollratensensors und zum Ermitteln des Signalversatzes (OFS_SIG) des Rollratensensors abhängig vom Signal (OMEGA_ROLL_SIG) des Rollratensensors ausgebildet ist, **dadurch gekennzeichnet, dass** die Vorrichtung weiterhin ausgebildet ist zum
- Ermitteln einer Querbeschleunigung (AC) des Fahrzeugs (10),
- Ermitteln einer zeitlichen Ableitung (DRV_AC) der Querbeschleunigung (AC),
- Überprüfen, ob ein Betrag der zeitlichen Ableitung (DRV_AC) der Querbeschleunigung (AC) kleiner als ein vorgegebener erster Schwellenwert (THD_1) ist und zum
- Ermitteln des Signalversatzes (OFS_SIG) des Rollratensensors, falls der Betrag der zeitlichen Ableitung (DRV_AC) der Querbeschleunigung (AC) kleiner als der vorgegebene erste Schwellenwert (THD_1) ist.

## Claims

1. Method for determining a signal offset (OFS_SIG) of a roll rate sensor of a motor vehicle (10), in which a signal (OMEGA_ROLL_SIG) of the roll rate sensor is detected and the signal offset (OFS_SIG) of the roll rate sensor is determined as a function of the signal (OMEGA_ROLL_SIG) of the roll rate sensor, **characterized in that**
- a transversal acceleration (AC) of the motor vehicle (10) is determined
- a temporal derivative (DRV_AC) of the transversal acceleration (AC) is determined
- a check is carried out to determine whether a value of the temporal derivative (DRV_AC) of the transversal acceleration (AC) is smaller than a predefined first threshold value (THD_1), and that
- the signal offset (OFS_SIG) of the roll rate sensor is determined if the value of the temporal derivative (DRV_AC) of the transversal acceleration (AC) is smaller than the predefined first threshold value (THD_1).

2. Method according to claim 1, in which the signal (OMEGA_ROLL_SIG) of the roll rate sensor is detected over a predefined period of time and the signal offset (OFS_SIG) is only determined as a function of the portions of the signal (OMEGA_ROLL_SIG) of the roll rate sensor, which are detected while the value of the temporal derivative (DRV_AC) of the transversal acceleration (AC) is smaller than the predefined first threshold value (THD_1).

3. Method according to one of the preceding claims, in which the transversal acceleration (AC) of the motor vehicle (10) is determined with a transversal acceleration sensor.

4. Method according to one of the preceding claims, in which the transversal acceleration (AC) of the motor vehicle (10) is determined as a function of at least two wheel speeds (VEL_WHEEL) of wheels (12) of the motor vehicle (10).

5. Method according to one of the preceding claims, in which a temporal derivative (DRV_SIG) of the signal (OMEGA_ROLL_SIG) of the roll rate sensor is determined and in which the signal offset (OFS_SIG) of the roll rate sensor is determined as a function of the signal (OMEGA_ROLL_SIG) of the roll rate sensor, if a value of the temporal derivative (DRV_SIG) of the signal (OMEGA_ROLL_SIG) of the roll rate sensor is smaller than a predefined second threshold value (THD_2).

6. Method according to one of the preceding claims, in which the wheel speed (VEL_WHEEL) of the at least one wheel (12) of the motor vehicle (10) is determined and in which the signal offset (OFS_SIG) of the roll rate sensor is determined as a function of the signal (OMEGA_ROLL_SIG) of the roll rate sensor, if a value of the determined wheel speed (VEL_WHEEL) of the corresponding wheel (12) is smaller than a predefined third threshold value (THD_3).

7. Method according to claim 6, in which a motor vehicle speed (VEL_VEH) is determined and in which the signal offset (OFS_SIG) of the roll rate sensor is determined as a function of the signal (OMEGA_ROLL_SIG) of the roll rate sensor, if a value of the determined motor vehicle speed (VEL_VEH) is smaller than the predefined third threshold value (THD_3).

8. Device for determining a signal offset (OFS_SIG) of a roll rate sensor of a motor vehicle (10), which is embodied in order to detect a signal (OMEGA_ROLL_SIG) of the roll rate sensor and to determine the signal offset (OFS_SIG) of the roll rate sensor and as a function of the signal (OMEGA_ROLL_SIG) of the roll rate sensor, **characterized in that** the device is also embodied so as to,
- determine a transversal acceleration (AC) of the motor vehicle (10)
- determine a temporal derivative (DRV_AC) of the transversal acceleration (AC),
- carry out a check to determine whether a value of the temporal derivative (DRV_AC) of the transversal acceleration (AC) is smaller than a predefined first threshold value (THD_1), and to
- determine the signal offset (OFS_SIG) of the roll rate sensor if the value of the temporal derivative (DRV_AC) of the transversal acceleration (AC) is smaller than the predefined first threshold value (THD_1).

## Revendications

1. Procédé pour déterminer un décalage de signal (OFS_SIG) d'un capteur de taux de roulis d'un véhicule (10), dans lequel un signal (OMEGA_ROLL_SIG) du capteur de taux de roulis est détecté et le décalage de signal (OFS_SIG) du capteur de taux de roulis est déterminé en fonction du signal (OMEGA_ROLL_SIG) du capteur de taux de roulis, **caractérisé en ce que**
- une accélération transversale (AC) du véhicule (10) est déterminée,
- une dérivée temporelle (DRV_AC) de l'accélération transversale (AC) est déterminée,
- il est vérifié si une valeur de la dérivée temporelle (DRV_AC) de l'accélération transversale (AC) est inférieure à une première valeur de seuil prédéfinie (THD_1), et **en ce que**
- la détermination du décalage de signal (OFS_SIG) du capteur de taux de roulis s'effectue lorsque la valeur de la dérivée temporelle (DRV_AC) de l'accélération transversale (AC) est inférieure à la première valeur de seuil prédéfinie (THD_1).

2. Procédé selon la revendication 1, dans lequel le signal (OMEGA_ROLL_SIG) du capteur de taux de roulis est détecté sur une période de temps prédéfinie et le décalage de signal (OFS_SIG) n'est déterminé qu'en fonction des fractions du signal (OMEGA_ROLL_SIG) du capteur de taux de roulis qui sont détectées, tandis que la valeur de la dérivée temporelle (DRV_AC) de l'accélération transversale (AC) est inférieure à la première valeur de seuil prédéfinie (THD_1).

3. Procédé selon l'une quelconque des revendications précédentes, dans lequel l'accélération transversale (AC) du véhicule (10) est déterminée à l'aide d'un capteur d'accélération transversale.

4. Procédé selon l'une quelconque des revendications précédentes, dans lequel l'accélération transversale (AC) du véhicule (10) est déterminée en fonction d'au moins deux vitesses (VEL_WHEEL) de roues (12) du véhicule (10).

5. Procédé selon l'une quelconque des revendications précédentes, dans lequel une dérivée temporelle (DRV_SIG) du signal (OMEGA_ROLL_SIG) du capteur de taux de roulis est déterminée et le décalage de signal (OFS_SIG) du capteur de taux de roulis est déterminé en fonction du signal (OMEGA_ROLL_SIG) du capteur de taux de signal, lorsqu'une valeur de la dérivée temporelle (DRV_SIG) du signal (OMEGA_ROLL_SIG) du capteur de taux de roulis est inférieure à une deuxième valeur de seuil prédéfinie (THD_2).

6. Procédé selon l'une quelconque des revendications précédentes, dans lequel la vitesse de roue (VEL_WHEEL) de la au moins une roue (12) du véhicule automobile (10) est déterminée et le décalage de signal (OFS_SIG) du capteur de taux de roulis est déterminé en fonction du signal (OMEGA_ROLL_SIG) du capteur de taux de roulis, lorsqu'une valeur de la vitesse déterminée (VEL_WHEEL) de la roue correspondante (12) est inférieure à une troisième valeur de seuil prédéfinie (THD_3).

7. Procédé selon la revendication 6, dans lequel une vitesse du véhicule (VEL_VEH) est déterminée et le décalage de signal (OFS_SIG) du capteur de taux de roulis est déterminé en fonction du signal (OMEGA_ROLL_SIG) du capteur de taux de roulis, lorsqu'une valeur de la vitesse du véhicule déterminée (VEL_VEH) est inférieure à la troisième valeur de seuil prédéfinie (THD_3).

8. Dispositif pour déterminer un décalage de signal (OFS_SIG) d'un capteur de taux de roulis d'un véhicule (10), qui est conçu pour détecter un signal (OMEGA_ROLL_SIG) du capteur de taux de roulis et pour déterminer le décalage de signal (OFS_SIG) du capteur de taux de roulis en fonction du signal (OMEGA_ROLL_SIG) du capteur de taux de roulis, **caractérisé en ce que** le dispositif est en outre conçu pour
- déterminer une accélération transversale (AC) du véhicule (10),
- déterminer une dérivée temporelle (DRV_AC) de l'accélération transversale (AC),
- vérifier si une valeur de la dérivée temporelle (DRV_AC) de l'accélération transversale (AC) est inférieure à une première valeur de seuil prédéfinie (THD_1) et pour
- déterminer le décalage de signal (OFS_SIG) du capteur de taux de roulis, lorsque la valeur de la dérivée temporelle (DRV_AC) de l'accélération transversale (AC) est inférieure à la première valeur de seuil prédéfinie (THD_1).
